# NEUE EUROPÄISCHE PATENTSCHRIFT

(11) **EP 2 477 875 B2**
(45) Veröffentlichungstag und Bekanntmachung des Hinweises auf die Entscheidung über den Einspruch: **06.03.2019**
(45) Hinweis auf die Patenterteilung: 07.08.2013
(21) Anmeldenummer: 10747175.7
(22) Anmeldetag: 23.08.2010
(51) Int. Cl.: B62D 21/11, B62D 21/15

(54) **HILFSRAHMEN FÜR EIN KRAFTFAHRZEUG**
SUPPORT FRAME FOR A MOTOR VEHICLE
CHASSIS AUXILIAIRE POUR UN VEHICULE AUTOMOBILE

(30) Priorität: 16.09.2009 DE 102009041771
(43) Veröffentlichungstag der Anmeldung: 25.07.2012
(73) Patentinhaber: Volkswagen Aktiengesellschaft, 38440 Wolfsburg (DE)
(72) Erfinder: FISCHER, Tobias, 38110 Braunschweig (DE); SELLSCHOPP, Jürgen, 38120 Braunschweig (DE); LINZ, Christof, 39108 Magdeburg (DE)
(74) Vertreter: Beck & Rössig European Patent Attorneys
(86) Internationale Anmeldenummer: PCT/EP2010/005145
(87) Internationale Veröffentlichungsnummer: WO 2011/032631

(56) Entgegenhaltungen:
- EP-A1- 0 941 912
- DE-A1- 19 959 607
- DE-A1-102005 038 182
- DE-A1-102006 009 289
- DE-A1-102006 013 547
- DE-A1-102006 013 550
- DE-A1-102006 013 554
- DE-B4-102006 013 548
- DE-T2- 60 216 034

## Beschreibung

Die Erfindung bezieht sich auf einen Hilfsrahmen für ein Kraftfahrzeug nach dem Oberbegriff von Patentanspruch 1.

Hilfsrahmen umfassend zwei Längsträger und mindestens einen Querträger sowie ein einschaliges Versteifungselement, das sich zwischen den Längsträgern des Hilfsrahmens erstreckt, werden üblicherweise an Vorder- und Hinterwagen von Personenkraftfahrzeugen eingesetzt. Sie dienen u. a. dazu, Hilfsaggregate wie beispielsweise ein Lenkgetriebe abzustützen und Ankopplungspunkte für Radführungslenker bereitzustellen. Darüber hinaus wird die Fahrzeugkarosserie versteift. Im Crashfall kann durch Deformation des Hilfsrahmens ein Teil der Verformungsenergie aufgenommen werden.

Ein Beispiel für einen solchen Hilfsrahmen findet sich in der EP 0941 912 B1. Bei diesem Hilfsrahmen ist das Versteifungselement als einschalige Wanne ausgebildet, welche an Konsolen, die sich an den Längsträgern befinden, angeschraubt ist. Ferner ist außenseitig an den Längsträgern jeweils eine weitere Konsole zur Abstützung eines Radführungslenkers angebracht. Die Konsolen für die Radführungslenker befinden sich dabei bezogen auf die Fahrzeuglängsrichtung zwischen den Anbindungspunkten des Versteifungselements an den Längsträgern. Mit dem aus der EP 0941 912 B1 bekannten, flächigen Versteifungselement kann eine gute Kapselung des Motorraums nach unten erzielt werden. Jedoch ist im Wartungsfall die Zugänglichkeit zum Motorraum von unten erschwert. Zudem ist das Versteifungselement verhältnismäßig schwer. Große Wandflächen können darüber hinaus zum Dröhnen neigen.

Ausgehend von dem aus der EP 0941 912 B1 bekannten Hilfsrahmen wurde in der DE 10 2005 061 417 A1 ein weiterer Hilfsrahmen vorgeschlagen, bei dem die Längsträger mit einem ersten Ende jeweils über ein in Fahrtrichtung vorderes Guss-Knotenelement mit dem Querträger verbunden sind, die Knotenelemente jeweils eine Anbindung für einen Radführungslenker ausbilden und das flächenhafte Versteifungselement an den Guß-Knotenelementen befestigt ist. Sämtliche Befestigungsfunktionen werden hierbei durch die Guss-Knotenelemente bereitgestellt. In gleicher Weise befinden sich an den rückseitigen Enden der Längsträger weitere Knotenelemente zur Ankopplung des Hilfsrahmens an die Fahrzeugkarosserie, wobei die weiteren Knotenelemente gleichzeitig hintere Befestigungspunkte für das Versteifungselement bereitstellen. Letzteres ist im Wesentlichen sternförmig mit vier Armen ausgebildet, wobei sich im Zentrum eine trogförmigen Vertiefung mit Längsrippen befindet. Zudem können die Arme durch Sicken versteift sein.

In der DE 10 2006 017 225 A1 wird für die gleiche Einbausituation ein weiterer Hilfsrahmen vorgeschlagen, der ein Versteifungselement in Form eines Strebenkreuzes aufweist. Dieses kann als einschalige Konstruktion im Tiefziehverfahren hergestellt werden. Zur Erzielung einer höheren Steifigkeit wird eine zweischalige Konstruktion bestehend aus Oberschale und Unterschale vorgeschlagen. In beiden Fällen ist das Strebenkreuz mit seinen Enden an vorderen und hinteren Gussknoten des Hilfsrahmens befestigt, wobei die vorderen Gussknoten ferner die Längsträger mit dem Querträger verbinden.

Aus der DE 10 2006 013 547 A1 ist ebenfalls ein Hilfsrahmen bekannt, der ein Strebenkreuz als Versteifungselement aufweist: Das Strebenkreuz ist mit zusätzlichen Seitenstreben und einer Querstrebe versteift, die jeweils die Strebenenden des Strebenkreuzes miteinander verbinden.

Auch die DE 10 2005 038 182 A1 betrifft einen Hilfsrahmen mit einem als Strebenkreuz ausgebildeten Versteifungselement.

Die DE 10 2006 013 554 A1 zeigt einen Hilfsrahmen mit einem flächigen Versteifungselement, das sich zwischen den Längsträgern des Hilfsrahmens erstreckt. Das Versteifungselement weist zumindest eine Längsstrebe und zwei Querstreben, die einen im Wesentlichen rechteckigen Außenrahmen bilden, und mehrere Innenstreben auf, die fachwerkartig innerhalb des Außenrahmens angeordnet sind. Das Versteifungselement ist zumindest zweiteilig aus einem Gerüstteil und einen Abschirmteil gebildet, wobei da Gerüstteil beispielsweise aus Strangpressprofilen und Gussknotenteilen zusammengesetzt ist.

Ein Hilfsrahmen der eingangsgenannten Art ist aus DE 10 2006 013 548 B4 bekannt. DE 10 2006 013 548 B4 lehrt zur Verbesserung des Deformationsverhalten bei einer Fahrzeugkollision einen Hilfsrahmen für Kraftfahrzeuge mit einander seitlich gegenüberliegenden Hilfsrahmen-Längsträgern, in die bei einer Fahrzeugkollision wirkende Aufprallkräfte in der Fahrzeuglängsrichtung einleitbar sind, wobei jedem der Hilfsrahmen-Längsträger eine Längsstrebe zugeordnet ist, mit der sich in der Fahrzeuglängsrichtung ein Lastpfad des Hilfsrahmens in einen ersten Lastpfad zum jeweiligen Hilfsrahmen-Längsträger und in einen zweiten Lastpfad zur zugeordneten Längsstrebe aufgabelt, und die Längsstreben Teil einer Versteifungs-Baugruppe sind, die die Längsstreben miteinander verbindet. Die Versteifungs-Baugruppe ist eine zweischalige Blechkonstruktion.

Vor diesem Hintergrund liegt der Erfindung die Aufgabe zugrunde, einen Hilfsrahmen zu schaffen, der günstige mechanische Eigenschaften sowohl im Hinblick auf die Aufnahme von Kräften im Fahrbetrieb als auch im Crashfall aufweist. Zudem soll er sich kostengünstig herstellen lassen und ein geringes Bauteilgewicht aufweisen.

Diese Aufgabe wird durch einen Hilfsrahmen gemäß Patentanspruch 1 gelöst.

Im Crashfall bietet der erfindungsgemäße Hilfsrahmen ein verbessertes Energieaufnahmevermögen insbesondere im Bereich der Längsstreben. Durch deren Gestaltung lassen sich der Verlauf der Kraftaufnahme und damit der Verzögerungsverlauf des Fahrzeugs während einer Deformation desselben gut einstellen. Sollknickstellen an den Längsstreben verhindern eine Blockbildung des Hilfsrahmens.

Die Fachwerkstruktur ermöglicht mit einer freien Fläche, die bei mindestens 27 Prozent der Gesamtfläche des Versteifungselements liegt, eine gute Zugänglichkeit zum Motorraum von unten zwecks Montage- und Servicetätigkeiten.

Darüber hinaus lässt sich das Versteifungselement aus einer Blechplatine einfach und kostengünstig herstellen. Die Fachwerkstruktur wird dabei durch einen entsprechenden Beschnitt der Platine erhalten.

Durch Variation des Beschnitts, die Ausbildung zusätzlicher Sicken sowie die Lage der Befestigungspunkte zur Ankopplung an die Längsträger kann das erfindungsgemäße Versteifungselement ohne großen Aufwand an den jeweiligen Bedarf angepasst werden.

Das Versteifungselement wird an den restlichen Hilfsrahmen angeschraubt, so dass dieses bei Bedarf entfernt werden kann, ohne dass der gesamte Hilfsrahmen vom Fahrzeug abgenommen werden müsste. Entsprechende Befestigungspunkte befinden sich an den Längsstreben des Außenrahmens. Dabei weisen die Längsstreben jeweils zwei Befestigungspunkte auf, die sich in den Eckbereichen des Außenrahmens, in denen die Längsstreben in die Querstreben übergehen, befinden. Darüber hinaus sind zusätzliche Befestigungspunkte an den Längsstreben vorgesehen, um die Steifigkeit der Vorderwagenstruktur zu erhöhen und das Crashverhalten zu beeinflussen.

Vorteilhafte Ausgestaltungen sind in weiteren Patentansprüchen angegeben.

So ist es beispielsweise möglich, zwei vordere Knotenelemente zur Ankopplung des Hilfsrahmens an einen Fahrzeugaufbau in zweischaliger Blechkonstruktion auszuführen. Die vorderen Knotenelemente sind dabei jeweils an einem Endabschnitt eines Längsträgers befestigt. Dabei kann der Endabschnitt in das jeweilige Knotenelement integriert sein. Insbesondere ist es möglich, die Knotenelemente so anzuordnen, dass zumindest Abschnitte derselben zwischen den Endabschnitten der Hilfsrahmen-Längsträger und karosserieseitigen Längsträgern liegen.

Die Längsträger können so in die Struktur der vorderen Knotenelemente einbezogen sein, dass sich diese jeweils über eine Lenkgetriebeaussparung hinweg erstrecken.

Gemäß einer weiteren, vorteilhaften Ausgestaltung der Erfindung ist der Querträger unmittelbar mit den Längsträgern verbunden, beispielsweise angeschweißt.

In einer vorteilhaften Ausgestaltung der Erfindung weist das Versteifungselement vordere Befestigungspunkte auf und ist mit diesen hinter den vorderen Knotenelementen an den Längsträgern befestigt.

An den Längsträgern kann jeweils eine sich nach innen und unten erstreckende Konsole befestigt ist sein, wobei das Versteifungselement mit den vorderen Befestigungspunkten an den Konsolen und über diese an den Längsträgern befestigt ist. Die Begriffe "vorn" und "hinten" und sind vorliegend stets auf die Vorwärtsfahrtrichtung eines Kraftfahrzeugs mit anmontiertem Hilfsrahmen bezogen. "Innen" bezieht sich auf eine Anordnung zur Fahrzeugmitte hin, während "unten" als zur Fahrbahn hin gerichtet zu verstehen ist.

Das Versteifungselement weist ferner hintere Befestigungspunkte auf und ist mit diesen an den Längsträgern befestigt. Vorzugsweise erfolgt diese Befestigung vor hinteren Knotenelementen, über die die Längsträger am Fahrzeugaufbau befestigt sind.

Gemäß einer weiteren, vorteilhaften Ausgestaltung der Erfindung weist das Versteifungselement an den Längsstreben zwischen den vorderen und hinteren Befestigungspunkten angeordnete mittlere Befestigungspunkte auf und ist an diesen unmittelbar mit den Längsträgern verbunden.

Zur Gewährleistung einer gezielten Deformation des Hilfsrahmens weist dieser an den Längsstreben Sollknickstellen auf. Die Innenstreben sind vorzugsweise so angeordnet und/oder ausgestaltet, dass diese ebenfalls gezielt einknicken können. Gemäß einer vorteilhaften Ausgestaltung werden die Sollknickstellen an den Längsstreben des Versteifungselements durch eine oder mehrere Quersicken oder durch Beschnitt der Längsstreben gebildet. In beiden Fällen kann die Ausbildung der Sollknickstellen unmittelbar während der Formgebung des Versteifungselements erfolgen.

Je nach Bedarf kann die Steifigkeit des Hilfsrahmens durch Längssicken an den Innenstreben und/oder den Querstreben weiter erhöht werden, die ebenfalls ohne Zusatzaufwand unmittelbar während der Formgebung des Versteifungselements ausgeformt werden können.

Nachfolgend wird die Erfindung anhand eines der Zeichnung dargestellten Ausführungsbeispiels sowie verschiedener Abwandlungen desselben näher erläutert. Die Zeichnung zeigt in:
- Figur 1: eine räumliche Ansicht eines Hilfsrahmens nach einem Ausführungsbeispiel der Erfindung,
- Figur 2: eine Ansicht des Versteifungselements des Hilfsrahmens gemäß Figur 1,
- Figur 3: eine Ansicht des Hilfsrahmens gemäß Figur 1 an einem Kraftfahrzeug im teilverformten Zustand während eines Offset-Crashs, bei dem vorwiegend die linke Fahrzeugseite deformiert wird,
- Figur 4: eine erste Abwandlung des Versteifungselements,
- Figur 5: eine zweite Abwandlung des Versteifungselements,
- Figur 6: eines dritte Abwandlung des Versteifungselements, und
- Figur 7: eine vierte Abwandlung des Versteifungselements.

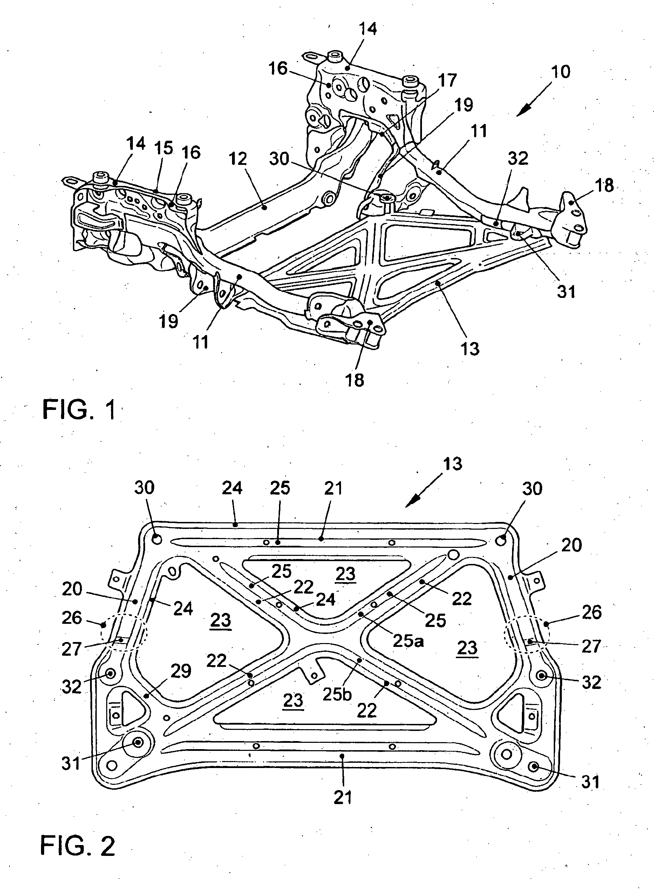

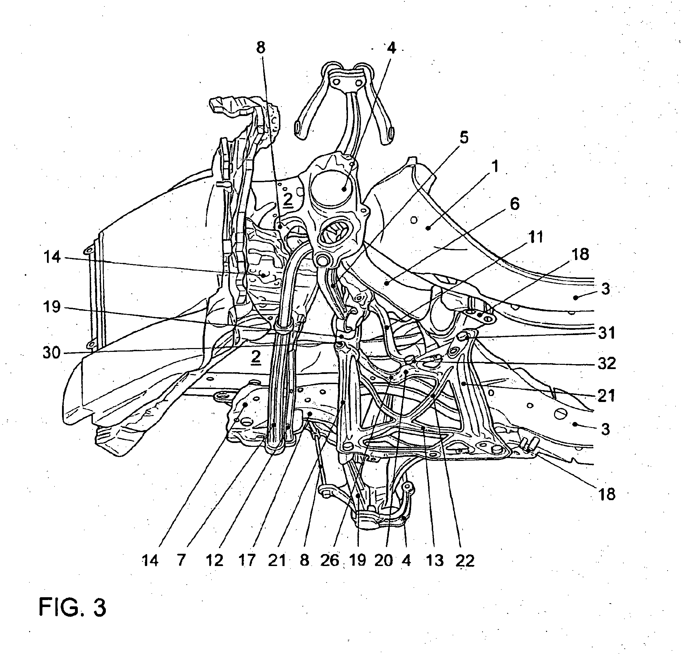

Das in den Figuren 1 bis 3 dargestellte erste Ausführungsbeispiel zeigt einen Hilfsrahmen 10 eines Personenkraftfahrzeugs, der im Bereich des Vorderwagens an einer Fahrzeugkarosserie 1 befestigt ist. Die Fahrzeugkarosserie 1 ist in Figur 3 durch Karosserie-Längsträger 2 angedeutet, welche in Seitenschweller 3 übergehen. Ferner ist in Figur 3 ein Radträger 4 zu erkennen, an dem unter anderem zwei untere Querlenker 5 und 6 sowie ein am Hilfsrahmen 10 abgestützter Stabilisator 7 und eine mit einem nicht näher dargestellten Lenkgetriebe gekoppelte Spurstange 8 angreifen.

Wie Figur 1 zeigt, umfasst Hilfsrahmen 10 zwei sich im Wesentlichen in Fahrzeuglängsrichtung erstreckende Längsträger 11, die im Einbauzustand unterhalb der Karosserie-Längsträger 2 verlaufen. Die Längsträger 11 des Hilfsrahmens 10 sind durch einen Querträger 12 miteinander verbunden. Dabei greift der Querträger 12 mit seinen Enden unmittelbar an den Längsträgern 11 an. Weiterhin umfasst der Hilfsrahmen 10 ein einschaliges Versteifungselement 13, das sich zwischen den Längsträgern 11 des Hilfsrahmens 10 erstreckt und in unten näher erläuterter Art und Weise an den Längsträgern 11 befestigt ist.

Der Hilfsrahmen 10 weist weiterhin zwei vordere Knotenelemente 14 auf, die an vorderen Endabschnitten der Längsträger 11 befestigt, vorzugsweise angeschweißt sind. Die vorderen Knotenelemente 14 sind in Blechkonstruktion ausgeführt und weisen vorliegend eine Innenschale 15 sowie eine Außenschale 16 auf. Die Innenschale 15 und die Außenschale 16 sind zur Karosserie 1 hin miteinander verbunden und umschließen einen Hohlraum, der nach unten durch den Endabschnitt eines Längsträgers 11 abgeschlossen wird.

Die Längsträger 11 erstrecken sich in Fahrzeuglängsrichtung nach vorn über den Querträger 12 hinaus und versteifen somit die Knotenelemente 14. Unmittelbar hinter dem Querträger 12 befindet sich ein Freiraum oberhalb des Niveaus des Versteifungselements 13 zur Aufnahme eines vorliegend nicht näher dargestellten Lenkgetriebes. Nach außen hin weist der Hilfsrahmen 10 entsprechende Lenkgetriebeaussparungen 17 auf, über welche die Längsträger 11 des Hilfsrahmens 10 hinweg nach vorne verlaufen.

An rückseitigen Endabschnitten der Längsträger 11 sind hintere Knotenelemente 18 befestigt, mittels derer der Hilfsrahmen 10 rückseitig an der Fahrzeugkarosserie 1 im Anschlussbereich der Karosserie-Längsträger 2 an die Seitenschweller 3 befestigt ist. Die Knotenelemente 18 und 14 sind bevorzugt mit der Fahrzeugkarosserie 1 verschraubt.

Weiterhin weist der Hilfsrahmen 10 zwei sich von den Längsträgern 11 nach innen und unten erstreckende Konsolen 19 auf. Diese sind bevorzugt an die Längsträger 11 angeschweißt und dienen jeweils der Ankopplung eines unteren Querlenkers 5. Die Konsolen 19 liegen dabei hinter dem Querträger 12 sowie hinter den vorderen Knotenelementen 14.

Der Hilfsrahmen 10 wird durch das Versteifungselement 13 ausgesteift. Dieses umfasst zwei Längsstreben 20 und zwei Querstreben 21, die einen im Wesentlichen rechteckigen Außenrahmen bilden. Weiterhin umfasst das Versteifungselement 13 mehrere Innenstreben 22, die fachwerkartig innerhalb des Außenrahmens angeordnet sind. Sämtliche Streben 20, 21 und 22 sind integral miteinander verbunden, das heißt durch Umformung und Beschnitt aus einer Blechplatine hergestellt. Sie bilden jeweils ein U-förmiges, nach unten offenes Profil, dessen Ränder 24 abgewinkelt sind und parallel zur Haupterstreckungsebene des im Wesentlichen ebenen Versteifungselements 13 verlaufen.

Die so gebildete Fachwerkstruktur weist je nach Anordnung der Innenstreben 22 mehrere Aussparungen 23 auf, wodurch der Motorraum durch das Versteifungselement 13 hindurch gut zugänglich ist. Der Flächenanteil der Aussparungen 23 bezogen auf die Gesamtfläche des Versteifungselements 13 beträgt dabei mindestens 27 Prozent und maximal 60 Prozent. Bei dem dargestellten Ausführungsbeispiel beträgt der Anteil der Aussparungen ca. 30 Prozent.

Bei dem in Figur 1 dargestellten Ausführungsbeispiel verlaufen die Innenstreben 22 diagonal zwischen den Ecken des im Wesentlichen rechteckigen Außenrahmens und kreuzen sich in etwa in der Mitte desselben. Sowohl die Innenstreben 22 als auch die Querstreben 21 sind zur weiteren Aussteifung mit Längssicken 25 versehen.

An den Längsstreben 11 des Versteifungselements 13 ist jeweils mindestens eine Sollknickstelle 26 ausgebildet ist, an der im Crashfall, wie in Figur 3 gezeigt, die Längsstreben 11 nach unten ausknicken, um eine Blockbildung des Hilfsrahmens 10 zu vermeiden. Bei dem dargestellten Ausführungsbeispiel werden die Sollknickstellen 26 jeweils durch eine Quersicke 27 an der jeweiligen Längsstrebe 11 gebildet. Jedoch können an den Längsstreben 11 auch jeweils mehr als eine Quersicke vorgesehen sein. Die Sollknickstellen 26 liegen bezogen auf die Fahrzeuglängsrichtung bevorzugt auf Höhe der Kreuzung der Innenstreben 22.

Das Versteifungselement 13 des Ausführungsbeispiels ist über drei Befestigungspunkte je Längsstrebe 11 am restlichen Hilfsrahmen 10 befestigt.

Dabei befinden sich vordere Befestigungspunkte 30 des Versteifungselements 13 an den in Fahrtrichtung vorderen Ecken des Außenrahmens. Diese vorderen Befestigungspunkte 30 sind vorzugsweise hinter den vorderen Knotenelementen 14 angeordnet. Bei dem dargestellten Ausführungsbeispiel erfolgt die Anbindung nicht unmittelbar an den Längsträgern 11 selbst, sondern an den an diesen befestigten Konsolen 19. Jedoch ist auch eine Befestigung der vorderen Befestigungspunkte 30 des Versteifungselements 13 unmittelbar an den Längsträgern 11 möglich.

Weiterhin befinden sich hintere Befestigungspunkte 31 des Versteifungselements 13 an den in Fahrtrichtung hinteren Ecken des Außenrahmens. Die hinteren Befestigungspunkte 31 liegen bevorzugt vor den hinteren Knotenelementen 18. Dabei kann die Befestigung unmittelbar an den Längsträgern 11 oder an zusätzlichen, an den Längsträgern 11 befestigten Konsolen erfolgen. Es ist auch möglich, in Abwandlung des dargestellten Ausführungsbeispiels die Befestigung der hinteren Befestigungspunkte 31 an den hinteren Knotenelementen 18 vorzunehmen.

Das Versteifungselement 13 ist ferner zwischen den vorderen und hinteren Befestigungspunkten 30 und 31 mit mittleren Befestigungspunkten 32 unmittelbar mit den Längsträgern 11 verbunden. Die mittleren Befestigungspunkte 32 liegen dabei hinter den Sollknickstellen 26. Sie können durch Innenstreben 29, welche unmittelbar an den mittleren Befestigungspunkten 32 angreifen, unterstützt werden.

Die Befestigung des Versteifungselements 13 am restlichen Hilfsrahmen 10 erfolgt bevorzugt mittels Schrauben, so dass sich im Bedarfsfall das Versteifungselement 13 leicht demontieren lässt und nicht der gesamte Hilfsrahmen 10 entfernt werden muss.

Wie vorstehend erläutert, verlaufen die Innenstreben 22 diagonal zwischen den Ecken des Außenrahmens, so das vier kleeblattförmig angeordnete im wesentlichen dreieckige Aussparungen 23 gebildet werden. Im Bereich der hinteren Ecken des Außenrahmens befindet sich zwischen den diagonal ausgerichteten Innenstreben 22 und den Längsstreben 20 jeweils eine etwa rechtwinklig zu den Innenstreben 22 angeordnete weitere Innenstrebe 29, welche die erstgenannten Innenstreben 22 jeweils mit dem mittleren Befestigungspunkt 32 verbindet, so dass an einer hinteren Ecke des Außenrahmens ein steifes Fachwerksdreieck aus der weiteren Innenstrebe 29, einem Abschnitt der diagonalen Innenstrebe 22 und einem hinteren Abschnitt der Längsstrebe 20 gebildet wird.

Die Längssicken 25 sind an den Innenstreben 22 so angeordnet, dass eine vordere Sicke 25a durchgängig über die jeweils vorderen Abschnitte der diagonal angeordneten Innenstreben 22 verläuft, d.h. über die Kreuzung der diagonalen Streben 22 fortgesetzt ist. In gleicher Weise verläuft eine hintere Sicke 25b über die hinteren Abschnitte der diagonalen Innenstreben 22.

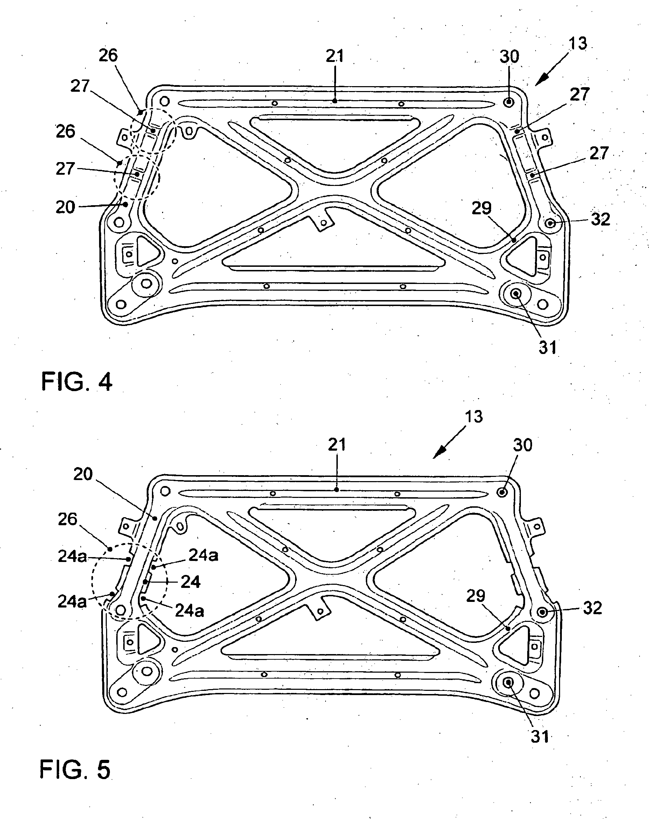

Von dem dargestellten Versteifungselement 13 sind zahlreiche Abwandlungen möglich, die nachfolgend anhand der Figuren 4 bis 7 erläutert werden.

Figur 4 zeigt eine erste Abwandlung, bei der zur Bereitstellung von Sollknickstellen 26 an den Längsstreben 20 mehrere, in Fahrtrichtung hintereinander liegende Quersicken 27 ausgebildet sind.

Bei der in Figur 5 dargestellten, zweiten Abwandlung werden eine oder mehrere Sollknickstellen 26 durch einen Beschnitt des Randes 24 der Längsstreben 20 erzielt. Wie Figur 5 zeigt, ist der Rand 24 hierzu an einer oder mehreren Stellen 24a unterbrochen, so dass sich dort eine gezielte Schwächung des Profils der betreffenden Längsstrebe 20 ergibt, wodurch im Crashfall die Längsstreben 20 an diesen Stellen nach unten ausknicken.

Weiterhin ist es möglich, die vorstehend erläuterten Maßnahmen zur Bereitstellung von Sollknickstellen 26 zu kombinieren. Ferner können auch andere Maßnahmen, welche eine gezielte lokale Profilschwächung an den Längsstreben 20 bewirken, zur Bereitstellung von Sollknickstellen 26 eingesetzt werden.

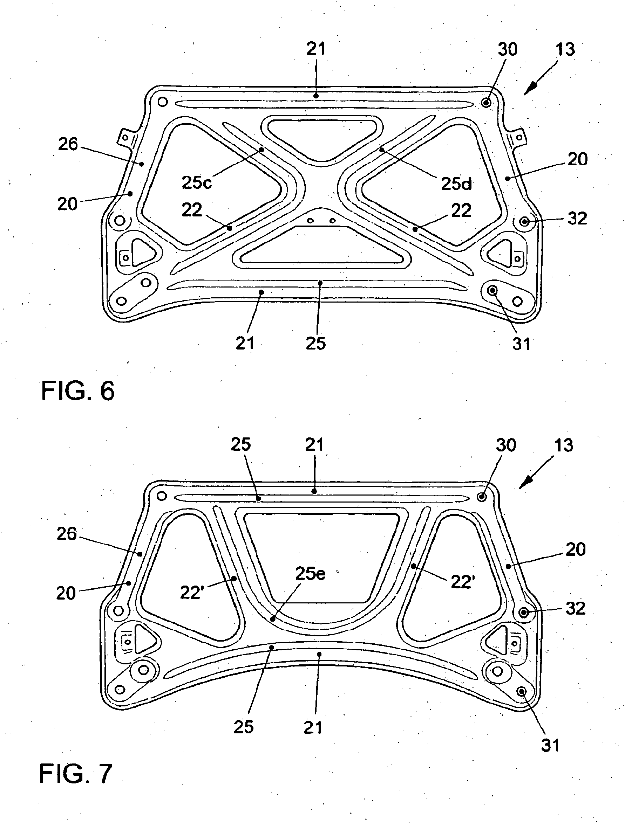

Figur 6 zeigt eine dritte Abwandlung des Versteifungselements 13 zur Veranschaulichung möglicher Variationen der Fachwerkstruktur durch eine von dem ersten Ausführungsbeispiel abweichende Anordnung der Innenstreben 22 und 29. In Figur 6 ist die gekreuzte Diagonalanordnung der Innenstreben 22 beibehalten. Jedoch ist beispielhaft ein anderer Verlauf der Längssicken 25 vorgesehen. Eine linke Sicke 25c erstreckt sich durchgängig entlang des vorderen Abschnitts einer diagonalen Innenstrebe 22 sowie des hinteren Abschnitts einer weiteren diagonalen Innenstrebe 22. In spiegelbildlicher Weise verläuft eine rechte Sicke 25d über die verbleibenden vorderen und hinteren Abschnitte der Innenstreben 22, wobei die Sicken 25c und 25d jeweils über die Kreuzung der diagonalen Streben 22 fortgesetzt sind.

Figur 7 zeigt als vierte Variante eine abgewandelte Fachwerkstruktur, bei der die diagonalen Innenstreben 22' jeweils in etwa von einer vorderen Ecke des Außenrahmens bis zur Mitte der in Fahrtrichtung hintenliegenden Querstrebe 21 verlaufen. Eine durchgängige Sicke 25e erstreckt sich über beide Innenstreben 22'. Die hinteren Ecken des Außenrahmens sind jeweils durch eine zusätzliche Innenstrebe 29 ausgesteift, welche sich in diesem Fall zwischen dem mittleren Befestigungspunkt 32 und der hinteren Querstrebe 21 erstreckt, um ein Fachwerksdreieck zu bilden.

Ferner kann der Hilfsrahmen 10 anders als in Figur 1 dargestellt ausgeführt werden. So ist es beispielsweise möglich, den Hilfsrahmen mit zwei Querträgern auszuführen, die in Fahrzeuglängsrichtung voneinander beabstandet sind, wobei ein hintenliegender Querträger auch hinter dem Versteifungselement liegen kann. Die Querträger verbinden in diesem Fall jeweils die beiden Längsträger. Der Anschluss des bzw. der Querträger an die Längsträger kann unmittelbar oder aber unter Zwischenschaltung eines Knotenelements erfolgen. Figur 1 zeigt beispielhaft einen Hilfsrahmen zur Anordnung an einem Vorderwagen. Ein entsprechender Hilfsrahmen mit einem Versteifungselement in Fachwerkstruktur kann jedoch auch an einem Hinterwagen angeordnet sein.

Die Erfindung wurde vorstehend anhand eines Ausführungsbeispiels sowie weiterer, beispielhafter Abwandlungen näher erläutert. Sie ist jedoch nicht hierauf beschränkt, sondern umfasst alle durch die Patentansprüche definierten Ausgestaltungen. Insbesondere können die in den Ausführungsbeispielen und Abwandlungen gezeigten Merkmale untereinander kombiniert werden.

### Bezugszeichenliste

- 1: Fahrzeugkarosserie
- 2: Längsträger der Fahrzeugkarosserie
- 3: Seitenschweller
- 4: Radträger
- 5: Querlenker
- 6: Querlenker
- 7: Stabilisator
- 8: Spurstange
- 10: Hilfsrahmen
- 11: Längsträger des Hilfsrahmens
- 12: Querträger
- 13: Versteifungselement
- 14: vorderes Knotenelement
- 15: Innenschale
- 16: Außenschale
- 17: Lenkgetriebeaussparung
- 18: hinteres Knotenelement
- 19: Konsole für Querlenker 5
- 20: Längsstrebe
- 21: Querstrebe
- 22, 22': Innenstrebe
- 23: Aussparung
- 24: Rand
- 24a: unterbrochene Stelle
- 25: Längssicke
- 25a: vordere Längssicke
- 25b: hintere Längssicke
- 25c: linke Längssicke
- 25d: rechte Längssicke
- 25e: durchgehende Längssicke
- 26: Sollknickstelle
- 27: Quersicke
- 29: weitere Innenstrebe
- 30: vorderer Befestigungspunkt
- 31: hinterer Befestigungspunkt
- 32: mittlerer Befestigungspunkt

## Patentansprüche

1. Hilfsrahmen für ein Kraftfahrzeug, umfassend zwei Längsträger (11) und mindestens einen Querträger (12) sowie ein einschaliges Versteifungselement (13), das sich zwischen den Längsträgern (11) des Hilfsrahmens erstreckt, wobei das Versteifungselement (13) zwei Längsstreben (20) und zwei Querstreben (21) aufweist, die einen im wesentlichen rechteckigen Außenrahmen bilden, wobei mehrere Innenstreben (22) fachwerkartig innerhalb des Außenrahmens angeordnet sind, wobei das Versteifungselement (13) an den restlichen Hilfsrahmen angeschraubt ist und entsprechende Befestigungspunkte sich an den Längsstreben des Außenrahmens befinden, wobei die Längsstreben (20) jeweils zwei Befestigungspunkte (30, 31) aufweisen, die in den Eckbereichen des Außenrahmens angeordnet sind, in denen die Längsstreben in die Querstreben übergehen, **dadurch gekennzeichnet, dass** an den Längsstreben (20) des Versteifungselements (13) jeweils mindestens eine Sollknickstelle (26) ausgebildet ist und zusätzliche Befestigungspunkte (32) an den Längsstreben vorgesehen sind.

2. Hilfsrahmen nach Anspruch 1, **dadurch gekennzeichnet, dass** dieser zwei vordere Knotenelemente (14) in mehrschaliger Blechkonstruktion zur Ankopplung des Hilfsrahmens (10) an einen Fahrzeugaufbau (1) aufweist, die jeweils an einem vorderen Endabschnitt eines Längsträgers (11) befestigt sind.

3. Hilfsrahmen nach Anspruch 1 oder 2, **dadurch gekennzeichnet, dass** der Querträger (12) unmittelbar mit den Längsträgern (13) verbunden ist.

4. Hilfsrahmen nach einem der Ansprüche 1 bis 3, **dadurch gekennzeichnet, dass** das Versteifungselement (13) vordere Befestigungspunkte (30) aufweist und mit diesen, vorzugsweise hinter vorderen Knotenelementen (14), an den Längsträgern (11) befestigt ist, und dass das Versteifungselement (13) hintere Befestigungspunkte (31) aufweist und mit diesen, vorzugsweise vor hinteren Knotenelementen (18), an den Längsträgern (11) befestigt ist.

5. Hilfsrahmen nach einem der Ansprüche 1 bis 4, **dadurch gekennzeichnet, dass** an den Längsträgern (11) jeweils eine sich nach innen und unten erstreckende Konsole (19) befestigt ist und das Versteifungselement (13) mit vorderen Befestigungspunkten (30) an den Konsolen (19) und über diese an den Längsträgern (11) befestigt ist.

6. Hilfsrahmen nach Anspruch 4 oder 5, **dadurch gekennzeichnet, dass** das Versteifungselement (13) an den Längsstreben (20) zwischen den vorderen und hinteren Befestigungspunkten (30, 31) angeordnete mittlere Befestigungspunkte (32) aufweist und an diesen unmittelbar mit den Längsträgern (11) verbunden ist.

7. Hilfsrahmen nach einem der Ansprüche 1 bis 6, **dadurch gekennzeichnet, dass** die Längsträger (11) des Hilfsrahmens sich jeweils über eine Lenkgetriebeaussparung (17) hinweg erstrecken.

8. Hilfsrahmen nach einem der Ansprüche 1 bis 7, **dadurch gekennzeichnet, dass** die Sollknickstellen (26) an den Längsstreben (20) des Versteifungselements (13) durch eine oder mehrere Quersicken (27) oder durch Beschnitt der Längsstreben (20) gebildet sind.

9. Hilfsrahmen nach einem der Ansprüche 1 bis 8, **dadurch gekennzeichnet, dass** die Innenstreben (22) und/oder Querstreben (21) des Versteifungselements (13) Längssicken (25) aufweisen.

## Claims

1. Support frame for a motor vehicle, comprising two longitudinal members (11) and at least one cross member (12), and also a single-shell reinforcing element (13) which extends between the longitudinal members (11) of the support frame, wherein the reinforcing element (13) has two longitudinal braces (20) and two cross braces (21), which form a substantially rectangular outer frame, wherein a plurality of inner braces (22) are arranged within the outer frame in the manner of latticework, wherein the reinforcing element (13) is screwed onto the rest of the support frame and corresponding fixing points are located on the longitudinal braces of the outer frame, wherein the longitudinal braces (20) each have two fixing points (30, 31) which are arranged in the corner regions of the outer frame, in which corner regions the longitudinal braces merge into the cross braces, **characterized in that** at least one predetermined buckling point (26) is formed on each of the longitudinal braces (20) of the reinforcing element (13) and additional fixing points (32) are provided at the longitudinal braces.

2. Support frame according to Claim 1, **characterized in that** said support frame has two front junction elements (14) in a multi-shell sheet-metal structure for coupling the support frame (10) to a vehicle body (1), said junction elements each being fixed to a front end portion of a longitudinal member (11).

3. Support frame according to Claim 1 or 2, **characterized in that** the cross member (12) is connected directly to the longitudinal members (13).

4. Support frame according to one of Claims 1 to 3, **characterized in that** the reinforcing element (13) has front fixing points (30) and is fixed by the latter to the longitudinal members (11), preferably behind front junction elements (14), and **in that** the reinforcing element (13) has rear fixing points (31) and is fixed by the latter to the longitudinal members (11), preferably in front of rear junction elements (18).

5. Support frame according to one of Claims 1 to 4, **characterized in that** an inwardly and downwardly extending bracket (19) is fixed to each of the longitudinal members (11), and the reinforcing element (13) is fixed by front fixing points (30) to the brackets (19) and via the latter to the longitudinal members (11).

6. Support frame according to Claim 4 or 5, **characterized in that** the reinforcing element (13) has central fixing points (32) arranged on the longitudinal braces (20) between the front and rear fixing points (30, 31) and is connected directly to the longitudinal members (11) at said central fixing points.

7. Support frame according to one of Claims 1 to 6, **characterized in that** the longitudinal members (11) of the support frame each extend beyond a steering-gear recess (17).

8. Support frame according to one of Claims 1 to 7, **characterized in that** the predetermined buckling points (26) on the longitudinal braces (20) of the reinforcing element (13) are formed by one or more transverse beads (27) or by trimming the longitudinal braces (20).

9. Support frame according to one of Claims 1 to 8, **characterized in that** the inner braces (22) and/or cross braces (21) of the reinforcing element (13) have longitudinal beads (25).

## Revendications

1. Châssis auxiliaire pour un véhicule automobile, comprenant deux supports longitudinaux (11) et au moins un support transversal (12) ainsi qu'un élément de rigidification monocoque (13), qui s'étend entre les supports longitudinaux (11) du châssis auxiliaire, l'élément de rigidification (13) présentant deux entretoises longitudinales (20) et deux entretoises transversales (21), qui forment un châssis extérieur essentiellement rectangulaire, plusieurs entretoises intérieures (22) étant disposées en treillis à l'intérieur du châssis extérieur, l'élément de rigidification (13) étant vissé au reste du châssis auxiliaire et des points de fixation correspondants se trouvant au niveau des entretoises longitudinales du châssis extérieur, les entretoises longitudinales (20) présentant à chaque fois deux points de fixation (30, 31) qui sont disposés dans les régions de coin du châssis extérieur, dans lesquelles les entretoises longitudinales se prolongent par les entretoises transversales, **caractérisé en ce qu'**au moins un point destiné à la flexion (26) est à chaque fois réalisé au niveau des entretoises longitudinales (20) de l'élément de rigidification (13) et des points de fixation additionnels (32) sont prévus au niveau des entretoises longitudinales.

2. Châssis auxiliaire selon la revendication 1, **caractérisé en ce que** celui-ci présente deux éléments de noeud avant (14) dans une construction en tôle multicoque pour l'accouplement du châssis auxiliaire (10) à une caisse de véhicule (1), lesquels sont fixés à chaque fois à une portion d'extrémité avant d'un support longitudinal (11).

3. Châssis auxiliaire selon la revendication 1 ou 2, **caractérisé en ce que** le support transversal (12) est connecté directement aux supports longitudinaux (13).

4. Châssis auxiliaire selon l'une quelconque des revendications 1 à 3, **caractérisé en ce que** l'élément de rigidification (13) présente des points de fixation avant (30) et est fixé par ceux-ci, de préférence derrière des éléments de noeud avant (14), aux supports longitudinaux (11), et **en ce que** l'élément de rigidification (13) présente des points de fixation arrière (31) et est fixé par ceux-ci, de préférence devant des éléments de noeud arrière (18), aux supports longitudinaux (11).

5. Châssis auxiliaire selon l'une quelconque des revendications 1 à 4, **caractérisé en ce qu'**à chaque fois une console (19) s'étendant vers l'intérieur et vers le bas est fixée aux supports longitudinaux (11) et l'élément de rigidification (13) est fixé par des points de fixation avant (30) aux consoles (19) et par le biais de celles-ci aux supports longitudinaux (11).

6. Châssis auxiliaire selon la revendication 4 ou 5, **caractérisé en ce que** l'élément de rigidification (13) présente des points de fixation (32) centraux disposés au niveau des entretoises longitudinales (20) entre les points de fixation avant et arrière (30, 31) et est connecté au niveau de ceux-ci directement aux supports longitudinaux (11).

7. Châssis auxiliaire selon l'une quelconque des revendications 1 à 6, **caractérisé en ce que** les supports longitudinaux (11) du châssis auxiliaire s'étendent à chaque fois au-delà d'un évidement d'un mécanisme de direction (17).

8. Châssis auxiliaire selon l'une quelconque des revendications 1 à 7, **caractérisé en ce que** les points destinés à la flexion (26) sont formés au niveau des entretoises longitudinales (20) de l'élément de rigidification (13) par une ou plusieurs moulures transversales (27) ou par découpe des entretoises longitudinales (20).

9. Châssis auxiliaire selon l'une quelconque des revendications 1 à 8, **caractérisé en ce que** les entretoises intérieures (22) et/ou les entretoises transversales (21) de l'élément de rigidification (13) présentent des moulures longitudinales (25).
